# EUROPEAN PATENT APPLICATION

(11) **EP 4 640 452 A1**
(43) Date of publication of application: **29.10.2025**
(21) Application number: 24750477.2
(22) Date of filing: 23.01.2024
(51) Int. Cl.: B60H 1/00

(54) **AIR MIXING DEVICE IN HVAC MODULE FOR AUTOMOBILE, AND HVAC MODULE COMPRISING SAME**

(30) Priority: 01.02.2023 KR 20230013807
(71) Applicant: ESTRA Automotive Systems Co., Ltd., Daegu 42981 (KR)
(72) Inventor: HWANG, Sung Kuk, Dalseong-Gun Daegu 42981 (KR); JEONG, Jae Ho, Dalseong-Gun Daegu 42981 (KR); KIM, Jin Hwa, Dalseong-Gun Daegu 42981 (KR); PARK, Sang Mun, Dalseong-Gun Daegu 42981 (KR); KIM, Ji Hyun, Dalseong-Gun Daegu 42981 (KR); LEE, Jun Ho, Dalseong-Gun Daegu 42981 (KR)
(74) Representative: Manitz Finsterwald Patent- und Rechtsanwaltspartnerschaft mbB
(86) International application number: PCT/KR2024/001049
(87) International publication number: WO 2024/162675

(57) **Abstract**

An air mixing device for mixing cooled air having passed through a cooling member of an HVAC module and heated air having passed through a heating member according to an embodiment of the present invention includes a plurality of air ducts each forming a heated air passage through which the heated air flows and arranged adjacent to each other. The plurality of the air ducts are arranged adjacent to each other in sequence to form a cooled air passage through which the cooled air flows between the adjacently arranged air ducts, and the air duct is configured such that a portion corresponding to a downstream side of a flow of the cooled air through the cooled air passage is entirely open.

## Description

### [Technical Field]

The present invention relates to an air mixing device of an HVAC (Heating, Ventilation and Air-conditioning) module of an automobile and an HVAC module including the same.

### [Background Art]

An HVAC module of an automobile is configured to mix the cool air from the evaporator core and the warm air from the heater core to create air of an appropriate temperature and then distribute the created air to each outlet. At this time, the temperature of the air sent to each outlet must be set differently by mixing air of different temperatures, but in reality, it is very difficult to control the temperature of the air sent to each outlet simply by controlling the flow inside the HVAC.

Since cold air does not pass through the heater core, its flow speed is higher than that of hot air, and it does not mix well with hot air, and has the characteristic of pushing out hot air when it meets it. An air mixing device is being used to mix cold air and hot air, but an air mixing device with an improved structure that can effectively control the flow rate ratio is required to stabilize the performance of HVAC.

### <Prior Art Documents >

- U.S patent US8,376,819 (2013.02.19)
- Japanese patent 4172013 (2008.08.20)

### [Detailed Description of the Invention]

### [Technical Problem]

The problem to be solved by the present invention is to provide an air mixing device of an HVAC module capable of effectively mixing heated air and cooled air.

### [Technical Solution]

An air mixing device for mixing cooled air having passed through a cooling member of an HVAC module and heated air having passed through a heating member according to an embodiment of the present invention includes a plurality of air ducts each forming a heated air passage through which the heated air flows and arranged adjacent to each other. The plurality of the air ducts are arranged adjacent to each other in sequence to form a cooled air passage through which the cooled air flows between the adjacently arranged air ducts, and the air duct is configured such that a portion corresponding to a downstream side of a flow of the cooled air through the cooled air passage is entirely open.

A surface of the air duct on a side into which the cooled air is introduced may be formed as a convex curved surface.

The heated air may be simultaneously introduced into the heated air passage formed in the air duct and a space between the air ducts.

The air mixing device may further include a tail plate formed to protrude from the air duct so as to be positioned downstream of a flow direction of the cooled air and upstream of a flow direction of the heated air, thereby forming an air mixing region of the cooled air and the heated air.

The tail plate may include one or more through holes for guiding mixed air in the air mixing region toward a foot discharge port.

The tail plate may be configured such that at least one of areas between the air ducts does not have a through hole formed therein to reduce an amount of mixed air guided to a vent outlet of a rear row.

The air mixing device according to another embodiment of the present invention further include a blocking plate fixed to the air duct at a position corresponding to an upstream side of a flow of the cooled air and a downstream side of a flow of the heated air, thereby reducing an amount of the cooled air flowing into the cooled air passage.

An HVAC module for an automobile according to an embodiment of the present invention includes: a housing; a cooling member arranged within the housing and configured to cool supply air; a heating member arranged within the housing and configured to heat the supply air; an air mixing device for mixing cooled air having passed through the cooling member and heated air having passed through the heating member; and at least one valve configured to control flow of mixed air having passed through the air mixing device to at least one distribution opening. The air mixing device comprises a plurality of air ducts arranged adjacent to each other, each of which forms a heated air passage through which the heated air flows, and the plurality of the air ducts are arranged adjacent to each other in sequence to form a cooled air passage through which the cooled air flows between the adjacently arranged air ducts. The air duct is configured such that a portion corresponding to a downstream side of a flow of the cooled air through the cooled air passage is entirely open.

### [Effect of the Invention]

According to the present invention, mixing of heated air and cooled air can be achieved efficiently.

### [Brief Description of the Drawings]

FIG. 1 is a perspective view of an HVAC module according to an embodiment of the present invention.
FIG. 2 is a perspective view of an air mixing device according to an embodiment of the present invention.
FIG. 3 is a bottom perspective view of an air mixing device according to an embodiment of the present invention.
FIG. 4 is a rear perspective view of an air mixing device according to an embodiment of the present invention.
FIG. 5 is a drawing showing air flow when an HVAC module according to an embodiment of the present invention operates in a vent mode.
FIG. 6 is a drawing showing air flow when an HVAC module according to an embodiment of the present invention operates in a tri-level mode.
FIG. 7 is a drawing showing air flow when an HVAC module according to an embodiment of the present invention operates in a high-level mode.
FIG. 8 is a drawing showing air flow when an HVAC module according to an embodiment of the present invention operates in a vent mode.
FIG. 9 is a drawing showing airflow when an HVAC module according to an embodiment of the present invention operates in a foot & defog mode.
FIG. 10 is a drawing showing airflow when an HVAC module according to an embodiment of the present invention operates in a defrost mode.

### [Best mode for carrying out the Invention]

Hereinafter, an embodiment of the present invention will be described in detail with reference to the attached drawings.

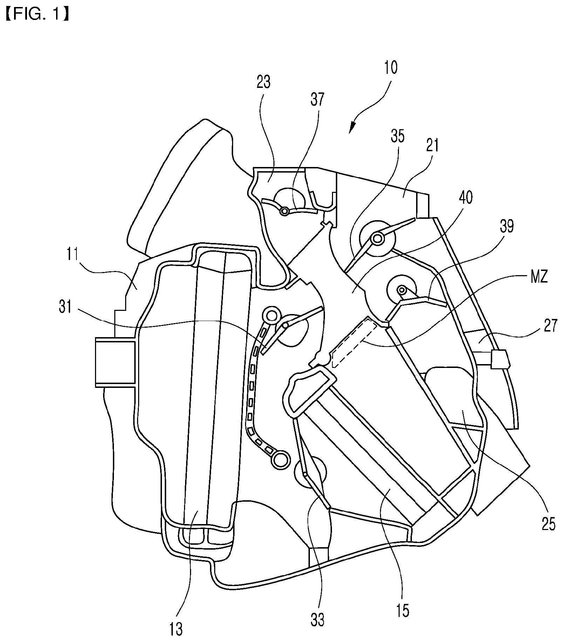

Referring to FIG. 1, an HVAC module 10 according to an embodiment of the present invention includes a housing 11. The housing 11 is configured to accommodate components to be described later and is configured to control and then discharge the temperature of the supply air, for example, exterior air or interior air in a passenger compartment. A cooling member for cooling the supply air, i.e., an evaporator core 13, and a heating member for heating the supply air, i.e., a heater core 15 may be arranged in an air passage within the HAVC module 10. For example, the heater core 15 may be arranged on the downstream side of the evaporator core 13 so that air that has first passed through the evaporator core 13 passes through the heater core 15. Hereinafter, air cooled by the evaporator core 13 is referred to as cooled air, and air heated by the heater core 15 is referred to as heated air.

An air mixing device 40 according to an embodiment of the present invention is arranged downstream of the evaporator core 13 and the heater core 15 and is configured to mix cooled air having passed through the evaporator core 13 and heated air having passed through the heater core 15. Throughout this specification, the air having passed through the evaporator core 13 is referred to as cooled air, the air having passed through the heater core 15 is referred to as heated air, and the air having passed through the air mixing device 40 is referred to as mixed air. Since only one of the heated air and the cooled air can be supplied to the air mixing device 40 as needed, the mixed air should be understood as a concept that includes not only the mixture of the heated air and the cooled air, but also the heated air or the cooled air.

The mixed air having passed through the air mixing device 40 may flow to first to fourth distribution openings 21, 23, 25 and 27. The first to fourth distribution openings 21, 23, 25 and 27 may be respectively connected to the outlets of the first row of the vehicle, i.e., the front row, such as a vent outlet, a defrost outlet, a foot outlet, and a vent outlet of the second row, i.e., the rear row.

A plurality of valves for controlling the airflow within the HVAC module 10 may be provided, for example, a first valve 31 for controlling the flow of cooled air having passed through the evaporator core 13 to the air mixing device 40, a second valve 33 for controlling the flow of cooled air having passed through the evaporator core 13 to the heater core 15, a third valve 35 for controlling the flow of the mixed air having passed through the air mixing device 40 to the first distribution opening 21, i.e., the vent outlet of the front row, and the fourth distribution opening 27, i.e., the vent outlet of the rear row, a fourth valve 37 for controlling the flow of the mixed air having passed through the air mixing device 40 to the second distribution opening 23, i.e., the defrost outlet, and a fifth valve 39 for controlling the flow of the mixed air having passed through the air mixing device 40 to the third distribution opening 25, i.e., the foot outlet. These valves 31, 33, 35, 37 and 39 can be implemented as valves of any shape, for example, plate valves, that can rotate around their respective rotational axes to control the opening/closing or opening rate of the air passage.

Depending on the rotational position of the first valve 31, the flow of cooled air having passed through the evaporator core 13 to the air mixing element 40 can be controlled, and depending on the rotational position of the second valve 33, the flow of cooled air having passed through the evaporator core 13 to the heater core 15 and accordingly the flow of heated air having passed through the heater core 15 to the air mixing device 40 can be controlled. Depending on the rotational position of the third valve 35, the flow of mixed air having passed through the air mixing element 40 to the vent outlet of the front row and the vent outlet of the rear row can be controlled. In addition, depending on the rotational position of the fourth valve 37, the flow of mixed air having passed through the air mixing element 40 to the defrost outlet can be controlled, and depending on the rotational position of the fifth valve 39, the flow of mixed air having passed through the air mixing element 40 to the foot outlet can be controlled.

The air mixing device 40 can be placed in a space where the cooled air having passed through the evaporator core 13 and the heated air having passed through the heater core 15 merge, and forms a cooled air passage and a heated air passage through which the cooled air and the heated air pass, respectively. In addition, the air mixing device 40 is configured to mix the introduced cooled air and the heated air with each other, and thereby the temperature and an amount of air flow of the mixed air can be controlled.

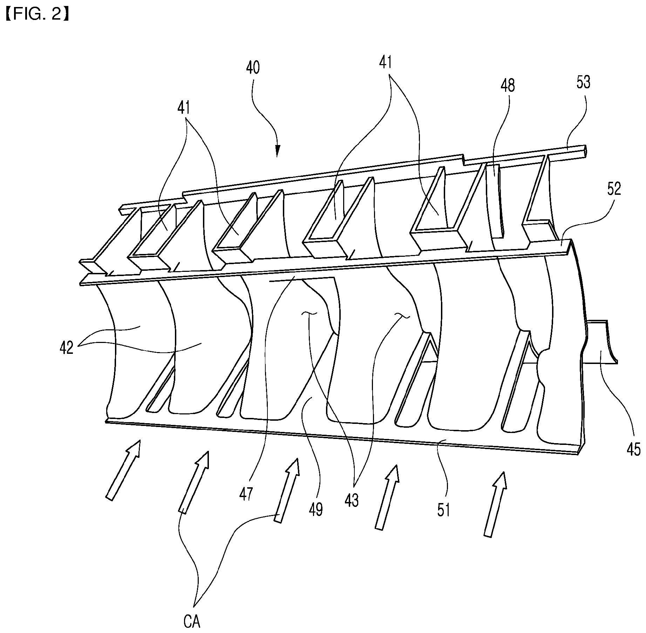

FIG. 2 to FIG. 4 illustrate perspective views of the air mixing device 40 according to an embodiment of the present invention from different viewing angles. The air mixing device 40 forms a heated air passage 41 through which the heated air having passed through the heater core 15 flows and a cooled air passage 43 through which the cooled air having passed through the evaporator core 13 flows, and is configured to discharge mixed air created by mixing the heated air and the cooled air in multiple directions.

Referring to FIG. 2 to FIG. 4, the air mixing device 40 includes a plurality of air ducts 42 each forming the heated air passage 41 through which the heated air flows. The plurality of air ducts 42 are arranged in a parallel manner adjacent to each other with a gap therebetween. The space between the adjacently arranged air ducts 42 forms a cooled air passage 43. In addition, the space between the adjacently arranged air ducts 42 is configured so that a part of the heated air flows, and in this respect, it can be said that the space between the air ducts 42 functions as a cooled air passage and a heated air passage at the same time. At this time, the heated air passage 41 and the cooled air passage 43 are formed to extend in a direction that substantially intersects each other. For example, the heated air passage 41 extends toward the fourth valve 37 with respect to FIG. 1, and the cooled air passage 43 extends toward the third valve 35 with respect to FIG. 1, whereby the heated air flowing through the heated air passage 41 and the cooled air flowing through the cooled air passage 43 flow in directions that substantially intersect each other. Connecting members 51, 52 and 53 may be provided to connect a plurality of the air ducts 42 arranged adjacently to each other. The connecting members 51, 52 and 53 may extend in the direction in which the plurality of the air ducts 42 are arranged to fixedly connect the plurality of the air ducts 42 to each other.

The air duct 42 is formed so that the side into which the cooled air is introduced has a convex curve and the opposite side is entirely open, for example, the air duct 42 has an approximately "U" shaped cross-section. Due to the open structure of the air duct 42, the heated air flowing in the heated air passage 41 and the cooled air flowing in the cooled air passage 43 can be mixed with each other. For example, a portion of the heated air flowing in the heated air passage 41 can flow out into the cooled air passage 43 and be mixed with the cooled air, and a portion of the cooled air can flow into the heated air passage 41 and be mixed with the heated air.

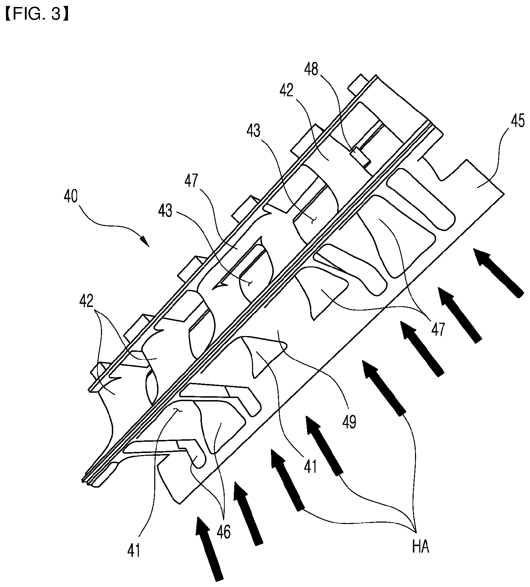

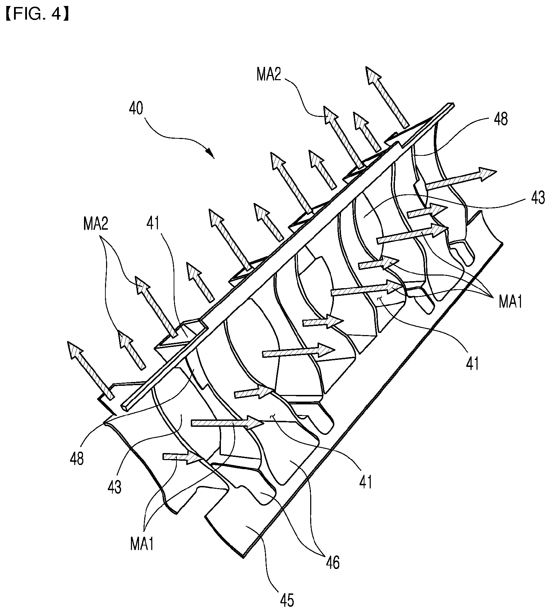

A cooled air flow CA is formed through the cooled air passage 43 formed between the air ducts 42 as illustrated in FIG. 2, and a heated air flow HA is formed through the heated air passage 41 formed within the air duct 42 and a space between the air ducts 42 as illustrated in FIG. 3. Since the air duct 42 has a structure in which a portion corresponding to the downstream side of the cooled air flow CA is open, as illustrated in FIG. 4, a part of the heated air is mixed into the cooled air flow CA to form a first mixed air flow MA1, and a part of the cooled air is mixed into the heated air flow HA to form a second mixed air flow MA2. At this time, the direction of the first mixed air flow MA1 and the direction of the second mixed air flow MA2 intersect each other. The first mixed air flow MA1 may be directed approximately toward the fourth valve 37, and the second mixed air flow MA2 may be directed approximately toward the third valve 23.

Since the downstream side of the air duct 42 has an entirely open structure with respect to the direction of the cooled air flow CA, mixing of the heated air and the cooled air can be effectively achieved, which leads to the ease of temperature control of the mixed air.

The air duct 42 may be formed such that the upstream portion with respect to the direction of the heated air flow, that is, the portion extending from the upstream end to the downstream end by a certain distance, has a cross-sectional area that decreases as it goes downstream. As a result, the heated air can be effectively mixed with the fast-flowing cooled air in the upstream portion of the cooling air passage 43.

In order to increase the mixing effect of the heated air and the cooled air, the air mixing device 40 is provided with a tail plate 45 at a portion corresponding to the upstream end with respect to the heated air flow and at a portion corresponding to the downstream end with respect to the cooled air flow. The air mixing device 40 is arranged to form an incline with respect to the main direction of the cooled air flow CA and the tail plate 45 is formed to block the cooled air flow CA passing between the air ducts 42, thereby forming an air mixing zone MZ where the cooled air and the cooled air are mixed, as illustrated in FIG. 1. The presence of the air mixing zone MZ allows the cooled air and the heated air to be mixed more effectively, which leads to the ease of temperature control.

The tail plate 45 may have one or more through holes 46 through which a portion of the first mixed air flow MA1 passes. By allowing a portion of the first mixed air flow MA1 to move through the through holes 46 to the third distribution opening 25, temperature control of air discharged from a foot outlet connected to the third distribution opening 25 can be effectively achieved.

A blocking plate 47 is provided to block a portion of the cooled air passage 43 formed between the air ducts 42. As shown in FIG. 2 to FIG. 4, the blocking plate 47 can be positioned upstream of the cooled air flow CA and downstream of the heated air flow HA. In addition, a region of the tail plate 45 corresponding to the blocking plate 47 can be formed so as not to have a through hole. The area of the blocking plate 47 and the tail plate 45 not having a through hole can reduce the amount of the mixed air flowing into the fourth distribution opening 27, i.e., the vent outlet of the rear row, thereby preventing a rapid increase in the temperature in the vent of the rear row. Furthermore, in order to more effectively prevent a rapid increase in the temperature in the vent of the rear row, a portion corresponding to the blocking plate 47 among the spaces between the adjacently arranged air ducts 42 can be closed by a closing portion 49 so that the heated air is not introduced.

In order to increase air mixing efficiency, a vortex-inducing plate 48 may be provided. As shown in FIG. 2 to FIG. 4, the vortex-inducing plate 48 may be formed to protrude from the outer peripheral surface of the air duct 42 into the cooled air passage 43, and may be positioned downstream with respect to the cooled air flow CA and downstream with respect to the heated air flow HA. The vortex-inducing plate 48 induces a vortex in the cooled air flow CA, thereby increasing the mixing efficiency of the cooled air flow CA and the heated air flow HA.

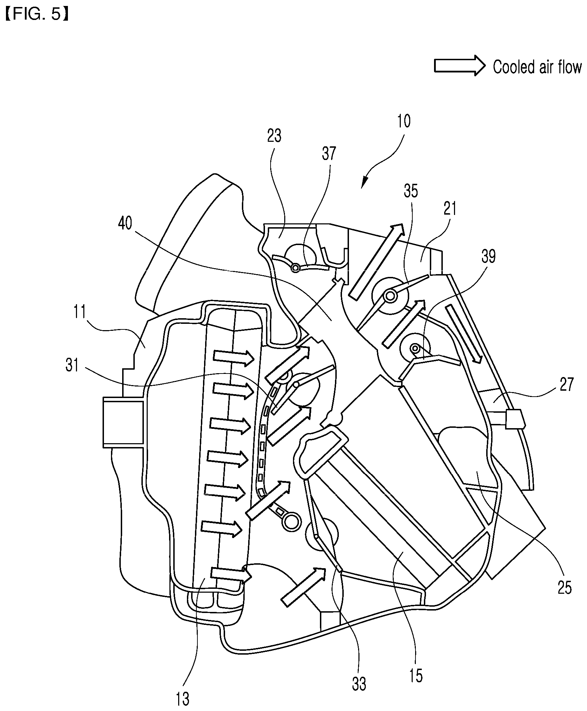

FIG. 5 to FIG. 10 are drawings showing airflow when the HVAC module 10 according to an embodiment of the present invention operates in various modes. FIG. 5 shows airflow in the vent mode, in which the cooled airflow is discharged through the first distribution opening 21, i.e., the vent outlet of the front row, and the fourth distribution opening 27, i.e., the vent outlet of the rear row. In a state of FIG. 5, the third valve 35 is open and the fourth and fifth valves 37 and 39 are closed.

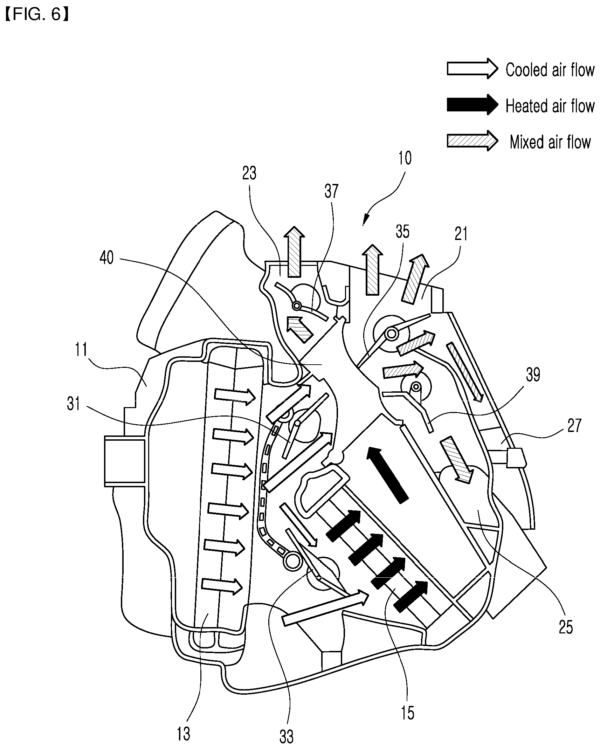

FIG. 6 shows the air flow in the tri-level mode, where the cooled air flow and the heated air flow are mixed by the air mixing device 40 and then discharged through the first to fourth distribution openings 21, 23, 25 and 27, i.e., the vent outlets of the front and rear rows, the defrost outlet, and the foot outlet. In a state of FIG. 6, all of the third to fifth valves 35, 37 and 39 are open.

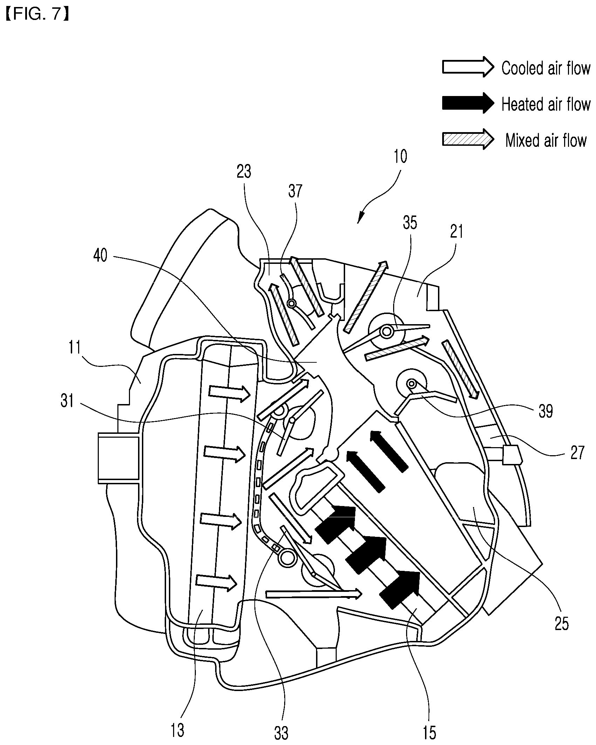

FIG. 7 shows the air flow in the high-level mode, in which the cooled air flow and the heated air flow are mixed by the air mixing device 40 and then discharged through the first distribution opening 21, i.e., the vent outlet of the front row, the second distribution opening 23, i.e., the defrost outlet, and the fourth distribution opening 27, i.e., the vent outlet of the rear row. In a state of FIG. 7, the third and fourth valves 35 and 37 are open and the fifth valve 39 is closed.

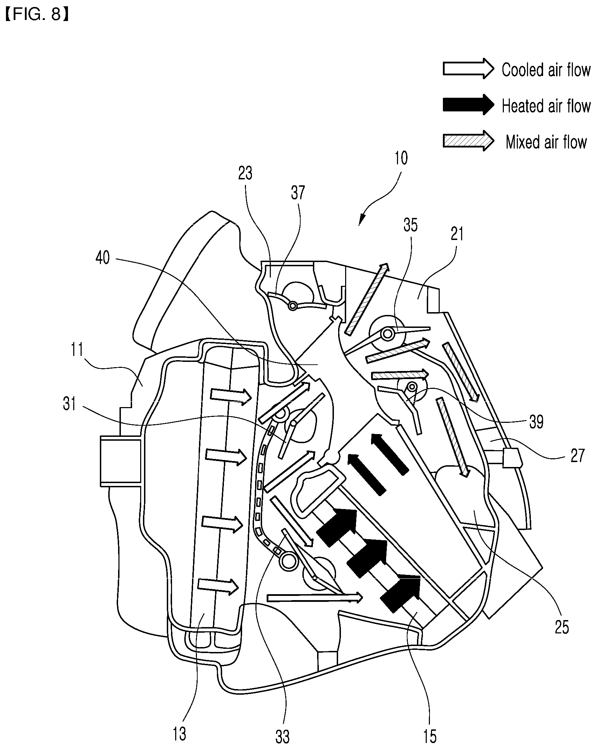

FIG. 8 shows the air flow in the operation of the bi-level mode, in which the cooled air flow and the heated air flow are mixed by the air mixing device 40 and then discharged through the first distribution opening 21, i.e., the vent outlet of the front row, the third distribution opening 25, i.e., the foot outlet, and the fourth distribution opening 27, i.e., the vent outlet of the rear row. In a state of FIG. 8, the third and fifth valves 35 and 39 are open and the fourth valve 37 is closed.

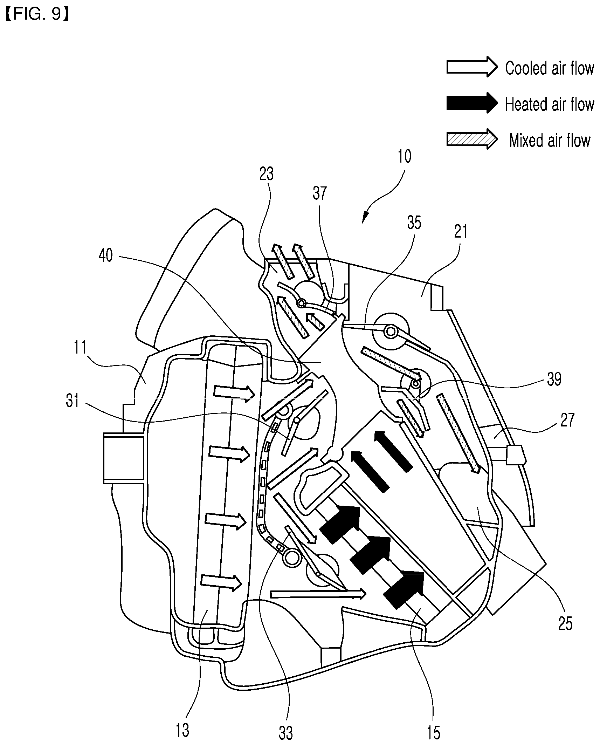

FIG. 9 shows the air flow during the operation of the foot mode and defog mode, in which the cooled air flow and the heated air flow are mixed by the air mixing device 40 and then discharged through the second distribution opening 23, i.e., the defrost discharge port, and the third distribution opening 25, i.e., the foot discharge port. In a state of FIG. 9, the third valve 35 is closed and the fourth and fifth valves 37 and 39 are open.

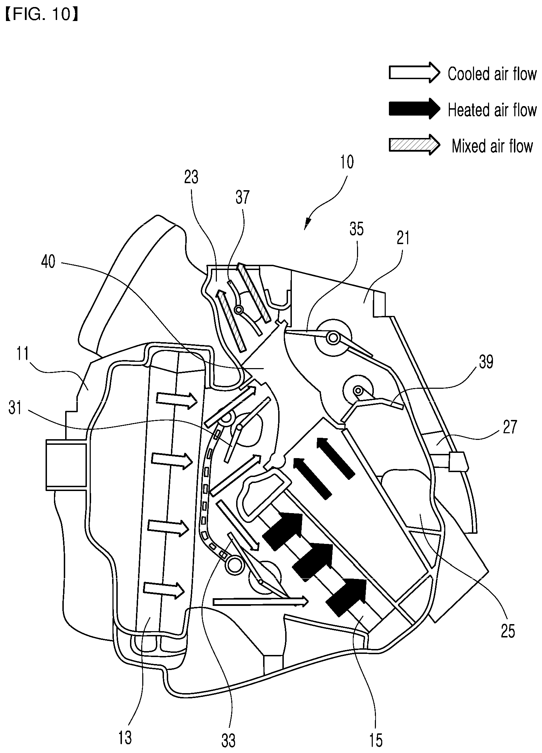

FIG. 10 shows the air flow in the operation of the defrost mode, in which the cooled air flow and the heated air flow are mixed by the air mixing device 40 and then discharged through the second distribution opening 23, i.e., the defrost discharge port. In a state of FIG. 10, the third and fifth valves 35 and 39 are closed and the fourth valve 37 is open.

Although the embodiments of the present invention have been described above, the scope of the present invention is not limited thereto, and includes all changes and modifications that can be easily modified and deemed equivalent by a person having ordinary skill in the art to which the present invention pertains from the embodiments of the present invention.

## Claims

1. An air mixing device for mixing cooled air having passed through a cooling member of an HVAC module and heated air having passed through a heating member, comprising a plurality of air ducts each forming a heated air passage through which the heated air flows and arranged adjacent to each other,
wherein the plurality of the air ducts are arranged adjacent to each other in sequence to form a cooled air passage through which the cooled air flows between the adjacently arranged air ducts, and
wherein the air duct is configured such that a portion corresponding to a downstream side of a flow of the cooled air through the cooled air passage is entirely open.

2. The air mixing device of claim 1, wherein a surface of the air duct on a side into which the cooled air is introduced is formed as a convex curved surface.

3. The air mixing device of claim 1, wherein the heated air is simultaneously introduced into the heated air passage formed in the air duct and a space between the air ducts.

4. The air mixing device of claim 1, further comprising a tail plate formed to protrude from the air duct so as to be positioned downstream of a flow direction of the cooled air and upstream of a flow direction of the heated air, thereby forming an air mixing region of the cooled air and the heated air.

5. The air mixing device of claim 4, wherein the tail plate comprises one or more through holes for guiding mixed air in the air mixing region toward a foot discharge port.

6. The air mixing device of claim 5, wherein the tail plate is configured such that at least one of areas between the air ducts does not have a through hole formed therein to reduce an amount of mixed air guided to a vent outlet of a rear row.

7. The air mixing device of claim 6, further comprising a blocking plate fixed to the air duct at a position corresponding to an upstream side of a flow of the cooled air and a downstream side of a flow of the heated air, thereby reducing an amount of the cooled air flowing into the cooled air passage.

8. An HVAC module for an automobile comprising:
a housing;
a cooling member arranged within the housing and configured to cool supply air;
a heating member arranged within the housing and configured to heat the supply air;
an air mixing device for mixing cooled air having passed through the cooling member and heated air having passed through the heating member; and
at least one valve configured to control flow of mixed air having passed through the air mixing device to at least one distribution opening;
wherein the air mixing device comprises a plurality of air ducts arranged adjacent to each other, each of which forms a heated air passage through which the heated air flows;
wherein the plurality of the air ducts are arranged adjacent to each other in sequence to form a cooled air passage through which the cooled air flows between the adjacently arranged air ducts, and
wherein the air duct is configured such that a portion corresponding to a downstream side of a flow of the cooled air through the cooled air passage is entirely open.

9. The HVAC module for an automobile of claim 8, wherein a surface of the air duct on a side into which the cooled air is introduced is formed as a convex curved surface.

10. The HVAC module for an automobile of claim 8, wherein the air mixing device is configured such that the heated air is simultaneously introduced into the heated air passage formed in the air duct and a space between the air ducts.

11. The HVAC module for an automobile of claim 8, wherein the air mixing device further comprises a tail plate formed to protrude from the air duct so as to be positioned downstream of a flow direction of the cooled air and upstream of a flow direction of the heated air, thereby forming an air mixing region of the cooled air and the heated air.

12. The HVAC module for an automobile of claim 18, wherein the tail plate comprises one or more through holes for guiding mixed air in the air mixing region toward a foot discharge port.

13. The HVAC module for an automobile of claim 12, wherein the tail plate is configured such that at least one of areas between the air ducts does not have a through hole formed therein to reduce an amount of mixed air guided to a vent outlet of a rear row.

14. The HVAC module for an automobile of claim 13, wherein the air mixing device further comprises a blocking plate fixed to the air duct at a position corresponding to an upstream side of a flow of the cooled air and a downstream side of a flow of the heated air, thereby reducing an amount of the cooled air flowing into the cooled air passage.
